(19) **Europäisches Patentamt / European Patent Office / Office européen des brevets**

(11) **EP 2 784 107 B1**

(12) # EUROPEAN PATENT SPECIFICATION

(45) Date of publication and mention
of the grant of the patent:
**04.01.2017 Bulletin 2017/01**

(51) Int Cl.:
*C08J 5/18* (2006.01)     *C08L 33/04* (2006.01)
*B32B 27/30* (2006.01)     *C08F 20/10* (2006.01)
*C09D 151/06* (2006.01)

(21) Application number: **12851027.8**

(22) Date of filing: **20.11.2012**

(86) International application number:
**PCT/KR2012/009835**

(87) International publication number:
**WO 2013/077614 (30.05.2013 Gazette 2013/22)**

(54) **ACRYL-BASED LAMINATE FILM HAVING GOOD WEATHERABILITY AND FORMABILITY AND METHOD FOR MANUFACTURING SAME**

LAMINATFILM AUF ACRYLBASIS MIT GUTER WETTERBESTÄNDIGKEIT UND FORMBARKEIT SOWIE VERFAHREN ZU SEINER HERSTELLUNG

FILM STRATIFIÉ À BASE DE RÉSINE ACRYLIQUE À BONNE RÉSISTANCE AUX INTEMPÉRIES ET BONNE FORMABILITÉ ET PROCÉDÉ DE FABRICATION CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.11.2011 KR 20110122751**

(43) Date of publication of application:
**01.10.2014 Bulletin 2014/40**

(73) Proprietors:
• **LG Hausys, Ltd.**
  **Seoul 150-721 (KR)**
• **LG MMA Corp.**
  **Yeosu-si, Jeollanam-do 555-805 (KR)**

(72) Inventors:
• **SHIN, Chang Hak**
  **Seoul 137-072 (KR)**
• **LEE, Eung Kee**
  **Gunpo-si**
  **Gyeonggi-do 435-745 (KR)**
• **LEE, Min Hee**
  **Gunpo-si**
  **Gyeonggi-do 435-060 (KR)**

• **LEE, Tae Hwa**
  **Daejeon 305-340 (KR)**
• **PARK, Ku Il**
  **Yongin-si**
  **Gyeonggi-do 448-838 (KR)**
• **HWANG, Deok Ryul**
  **Seoul 156-091 (KR)**
• **SEO, Hye-Won**
  **Daejeon 302-781 (KR)**
• **LEE, Young-Soo**
  **Daejeon 305-772 (KR)**
• **JEON, Eun-Jin**
  **Daejeon 302-761 (KR)**

(74) Representative: **Gill Jennings & Every LLP**
**The Broadgate Tower**
**20 Primrose Street**
**London EC2A 2ES (GB)**

(56) References cited:
**EP-A1- 1 582 538      EP-A1- 2 065 410**
**JP-A- H07 149 994     JP-A- 2001 064 469**
**JP-A- 2006 299 037    KR-A- 20060 016 853**
**KR-A- 20070 006 928   KR-A- 20090 034 200**
**KR-A- 20120 056 974**

**Description**

[Technical Field]

The present invention relates to an acrylic laminate film and a method for manufacturing the same, and more particularly, to an acrylic laminate film exhibiting excellent properties in terms of stress-whitening resistance, transparency, impact resistance, film formability and processability, and a method for manufacturing the same.

[Background Art]

Acrylic resins exhibit excellent transparency, weather resistance and formability, and thus are used in a variety of industries such as optical products, housings for electronics, and the like.

In particular, acrylic resins can be molded into an acrylic sheet or film, or be laminated on plastics, wood, metal, and the like. A film prepared by molding the acrylic resin must have high film formability and impact resistance, and must be prevented in deterioration of transparency during processing in order to allow easy change of thickness and exhibits outstanding casting properties. To this end, a component including acrylic rubbers is dispersed in the acrylic resin, or a graft copolymer is used.

EP 1 582 538 discloses a multilayer structure polymer (I) prepared by sequentially polymerizing (1) an innermost layer polymer, (2) an intermediate layer polymer with a glass-transition temperature of 25 to 100°C having a composition different from that of the innermost layer polymer, and (3) an outermost layer polymer. It is disclosed that the polymer (I) was obtained as polymer beads. The monomer composition of the thermoplastic polymer is different from the monomer composition of the outer layer of the innermost layer polymer.

In the related art, Japanese Patent Publication No. H10-306192 discloses a film formed of a resin composition, which includes an acrylic polymer having a specific reduced viscosity and a multilayered acrylic polymer, and allows easy adjustment of thickness.

However, although the acrylic polymer disclosed in the above document is prepared in a multilayer structure by gradationally changing amounts of components in order to suppress whitening or deterioration in transparency, there are problems in that the acrylic polymer is deteriorated in impact resistance, and that a secondarily processed film after lamination is deteriorated in transparency and suffers from stress-whitening.

Such acrylic laminate film may be used in decorative sheets including indoor and outdoor decorative sheets, and may also be used as surface films. For example, the acrylic laminate film is used in indoor and outdoor environments, such as windows, doors, furniture, sinks, and the like. In addition, to satisfy application requirements for such environments, the acrylic laminate film should be attached well outdoors for a long time, maintain optical transparency, and not suffer from stress-whitening upon formation.

Here, an outdoor decorative film includes a base film, such as PP, PE, PET, PVC films, and the like, a printed layer on the base film, and an acrylic film. In addition, the outdoor decorative film is used in widow profiles, doors and the like in construction sites.

However, when the outdoor decorative film is crumpled in a construction site, or suffers from stress-whitening due to dents or surface impact after construction, there can be a problem in external appearance after construction. The acrylic laminate film including general acryl alone exhibits poor elongation and suffers from breakage, and thus is less useful as a surface material. To overcome such problems, a general impact modifier can be added to the acrylic laminate film. In this case, however, there can be a problem in terms of external appearance due to whitening when forming a curved surface.

In addition, the acrylic laminate film may exhibit higher haze with thinner thickness thereof, and such high haze can cause deterioration in external appearance of the decorative film.

[Disclosure]

[Technical Problem]

It is one aspect of the present invention to provide an acrylic laminate film which can exhibit transparency and stress-whitening resistance, and has improved properties in terms of compatibility, impact resistance and casting properties using an acrylic rubber copolymer having a multilayer structure of a core and a shell, and a bead-shaped acrylic thermoplastic resin having the same composition as that of the shell.

It is another aspect of the present invention to provide a method for manufacturing an acrylic laminate film, which can prevent deterioration in optical properties of the film by adjusting an amount of a multilayered acrylic rubber copolymer, and allow the film to exhibit high transmittance and low haze by minimizing surface roughness of the film in preparation of the thin film through T-die extrusion.

[Technical Solution]

In accordance with one aspect of the present invention, an acrylic laminate film is provided, comprising: 30 wt% to 60 wt% of a particulate acrylic rubber copolymer having a multilayer structure of a core and a shell, and 70 wt% to 40 wt% of a bead-shaped acrylic thermoplastic resin, wherein the core of the acrylic rubber copolymer comprises at least one selected from among a methacrylic acid ester monomer, an aromatic vinyl monomer, a cross-linking agent and an initiator, and the shell of the acrylic rubber copolymer comprises at least one selected from among an acrylic acid ester monomer, a methacrylic acid ester monomer, a chain transfer agent, an initiator and a cross-linking agent, wherein the core of the acrylic rubber copolymer comprises 50 wt% to 90 wt% of the methacrylic acid ester monomer and 10 wt% to 50 wt% of the aromatic vinyl monomer such as styrene, a-methylstyrene, o-ethylstyrene, p-ethylstyrene, vinyl toluene, or derivatives thereof, based on a total weight of the monomers, wherein the shell of the acrylic rubber copolymer comprises 10 wt% to 50 wt% of the acrylic acid ester monomer and 50 wt% to 90 wt% of the methacrylic acid ester monomer, based on a total weight of the monomers. wherein the bead-shaped acrylic thermoplastic resin comprises at least one selected from among an acrylic acid ester monomer, a methacrylic acid ester monomer, a chain transfer agent, and an initiator, wherein the acrylic thermoplastic resin comprises 10 wt% to 50 wt% of the acrylic acid ester monomer and 50 wt% to 90 wt% of the methacrylic acid ester monomer, based on the total weight of the monomers, wherein the bead-shaped acrylic thermoplastic resin has the same composition as that of the shell.

In accordance with another aspect of the present invention, a method for manufacturing an acrylic laminate film is provided, comprising: (a) preparing a particulate acrylic rubber copolymer having a multilayer structure of a core and a shell, (b) preparing a bead-shaped acrylic thermoplastic resin, (c) preparing a resin mixture by mixing the particulate acrylic rubber copolymer and the bead-shaped acrylic thermoplastic resin in a weight ratio of 30 to 60:70 to 40, and (d) molding the resin mixture by melting and kneading the resin mixture wherein the (a) preparing a particulate acrylic rubber copolymer comprises: (a-1) forming the core by mixing a methacrylic acid ester monomer, an aromatic vinyl monomer, a cross-linking agent and an initiator with deionized water in a reactor under a nitrogen atmosphere, followed by emulsion polymerization; and (a-2) preparing a particulate acrylic rubber copolymer having a multilayer structure of a core and a shell by forming the shell, which covers the core through emulsion polymerization by mixing an acrylic acid ester monomer, a methacrylic acid ester monomer, a chain transfer agent, an initiator and a cross-linking agent in the reactor of a nitrogen atmosphere, followed by coagulation, dehydration and drying, wherein the (b) preparing a bead-shaped acrylic thermoplastic resin comprises: (b-1) performing suspension polymerization by introducing the acrylic acid ester monomer, the methacrylic acid ester monomer, the chain transfer agent and the initiator into a solution in which a dispersant and a buffer salt are mixed with deionized water; and (b-2) preparing a bead-shaped acrylic thermoplastic resin by washing, dehydrating and drying the resultant obtained through suspension polymerization, wherein the core of the acrylic rubber copolymer comprises 50 wt% to 90 wt% of the methacrylic acid ester monomer and 10 wt% to 50 wt% of the aromatic vinyl monomer such as styrene, a-methylstyrene, o-ethylstyrene, p-ethylstyrene, vinyl toluene, or derivatives thereof, based on a total weight of the monomers, wherein the shell of the acrylic rubber copolymer comprises 10 wt% to 50 wt% of the acrylic acid ester monomer and 50 wt% to 90 wt% of the methacrylic acid ester monomer, based on a total weight of the monomers. wherein the bead-shaped acrylic thermoplastic resin comprises at least one selected from among an acrylic acid ester monomer, a methacrylic acid ester monomer, a chain transfer agent, and an initiator, wherein the acrylic thermoplastic resin comprises 10 wt% to 50 wt% of the acrylic acid ester monomer and 50 wt% to 90 wt% of the methacrylic acid ester monomer, based on the total weight of the monomers, wherein the bead-shaped acrylic thermoplastic resin has the same composition as that of the shell.

[Advantageous Effects]

According to the present invention, the acrylic laminate film and the method for manufacturing the acrylic laminate film have the following advantageous effects.

First, according to the invention, there is an advantage in that, since the acrylic laminate film has improved stress-whitening resistance and film formability while exhibiting excellent weather resistance, casting properties and transparency, the acrylic laminate film can be prevented from whitening during processing, and does not suffer from deterioration in transparency.

Secondly, according to the invention, the acrylic laminate film can be prevented from deterioration in optical properties by minimizing the amount of the acrylic rubber copolymer, and exhibit stress-whitening resistance by forming the film in a core-shell multilayer structure and preparing the shell through polymerization in at least two stages.

Thirdly, according to the invention, the acrylic laminate film can exhibit stress-whitening resistance and has improved transparency and optical properties while exhibiting improved compatibility by forming a bead-shaped acrylic thermoplastic resin from a material having the same composition as that of the shell comprising the particulate acrylic rubber copolymer.

Fourthly, according to the invention, the acrylic laminate film exhibits excellent stress-whitening resistance, transparency and optical properties, and thus can be used as a decorative sheet of windows, doors, furniture and sinks.

[Description of Drawings]

Fig. 1 is a flowchart of a method for manufacturing an acrylic laminate film according to one embodiment of the present invention.
Fig. 2 is a diagram of a twin roll type continuous casting apparatus.

[Best Mode]

The above and other aspects, features, and advantages of the present invention will become apparent from the detailed description of the following embodiments in conjunction with the accompanying drawings. It should be understood that the present invention is not limited to the following embodiments and may be embodied in different ways, and that the embodiments are provided for complete disclosure and thorough understanding of the present invention by those skilled in the art. The scope of the present invention is defined only by the claims. Like components will be denoted by like reference numerals throughout the specification.

Hereinafter, an acrylic laminate film exhibiting excellent weather resistance and formability, and a method for manufacturing an acrylic laminate film according to embodiments of the present invention will be described in detail with reference to the accompanying drawings.

According to embodiments of the invention, an acrylic laminate film may include: 30 wt% to 60 wt% of a particulate acrylic rubber copolymer having a multilayer structure of a core and a shell; and 70 wt% to 30 wt% of a bead-shaped acrylic thermoplastic resin.

Here, the acrylic laminate film has a multilayer structure of a core and a shell, and has an average diameter from 50 nm to 150 nm. In particular, since the shell of the particulate acrylic rubber copolymer has the same monomer composition as that of an acrylic thermoplastic resin composition, the acrylic laminate film can be prevented from whitening or change in transparency upon deformation, and has improved impact resistance without deterioration in optical properties by adjusting the amount of the acrylic rubber copolymer.

That is, the core of the acrylic rubber copolymer may include at least one selected from among a methacrylic acid ester monomer, an aromatic vinyl monomer, a cross-linking agent, and an initiator; and the shell of the acrylic rubber copolymer may include at least one selected from among an acrylic acid ester monomer, a methacrylic acid ester monomer, a chain transfer agent, an initiator, and a cross-linking agent.

Here, the acrylic rubber copolymer may include 30 wt% to 50 wt% of the core, and 50 wt% to 70 wt% of the shell.

The core of the acrylic rubber copolymer may include 50 wt% to 90 wt% of the methacrylic acid ester monomer and 10 wt% to 50 wt% of the aromatic vinyl monomer, based on the total weight of the monomers. Here, the aromatic vinyl monomer may include at least one selected from the group consisting of styrene, $\alpha$-methylstyrene, o-ethylstyrene, p-ethylstyrene, vinyl toluene, and derivatives thereof.

In addition, the cross-linking agent may include at least one selected from among 1,2-ethanediol di(meth)acrylate, 1,3-propanediol di(meth)acrylate, 1,4-butanediol di(meth)acrylate, 1,5-pentanediol di(meth)acrylate, 1,6-hexanediol di(meth)acrylate, divinylbenzene, ethylene glycol di(meth)acrylate, propylene glycol di(meth)acrylate, butylene glycol di(meth)acrylate, triethylene glycol di(meth)acrylate, polyethylene glycol di(meth)acrylate, polypropylene glycol di(meth)acrylate, polybutylene glycol di(meth)acrylate, and allyl (meth)acrylate.

The core of the acrylic rubber copolymer may further include 0.1 parts by weight to 10 parts by weight of a grafting agent based on 100 parts by weight of the total monomers. The grafting agent may include at least one selected from among allyl (meth)acrylate and diallyl malate. In addition, the shell of the acrylic rubber copolymer may include 10 wt% to 50 wt% of the acrylic acid ester monomer, and 50 wt% to 90 wt% of the methacrylic acid ester monomer based on the total weight of the monomers.

The bead-shaped acrylic thermoplastic resin may include at least one selected from among an acrylic acid ester monomer, a methacrylic acid ester monomer, a chain transfer agent, and an initiator. Here, the acrylic thermoplastic resin may include 10 wt% to 50 wt% of the acrylic acid ester monomer, and 50 wt% to 90 wt% of the methacrylic acid ester monomer based on the total weight of the monomers. Here, the initiator may include at least one selected from among cumene hydroperoxide, diisopropylbenzene hydroperoxide, azobisisobutyronitrile, tert-butyl hydroperoxide, p-methane hydroperoxide, and benzoyl peroxide.

Hereinafter, a method for manufacturing an acrylic laminate film according to embodiments of the present invention will be described in more detail.

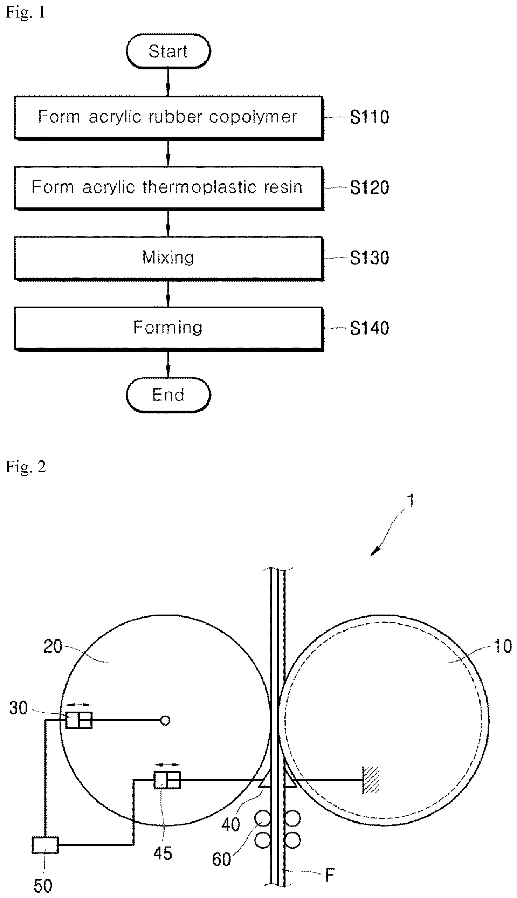

Fig. 1 is a flowchart of a method for manufacturing an acrylic laminate film according to one embodiment of the present invention.

Referring to Fig. 1, a method for manufacturing an acrylic laminate film includes preparing an acrylic rubber copolymer (S110), preparing an acrylic thermoplastic resin (S120), mixing (S130), and molding (S140).

**Preparation of acrylic rubber copolymer**

In operation S110 of preparing an acrylic rubber copolymer, a particulate acrylic rubber copolymer having a multilayer structure of a core and a shell is prepared.

Here, the preparation of the acrylic rubber copolymer may include: forming a core by mixing a methacrylic acid ester monomer, an aromatic vinyl monomer, a cross-linking agent and an initiator with deionized water in a reactor under a nitrogen atmosphere, followed by emulsion polymerization; and preparing a particulate acrylic rubber copolymer having a multilayer structure of a core and a shell by forming a shell, which covers the core through emulsion polymerization by mixing an acrylic acid ester monomer, a methacrylic acid ester monomer, a chain transfer agent, an initiator and a cross-linking agent in the reactor, followed by coagulation, dehydration and drying.

Here, the acrylic rubber copolymer may include 30 wt% to 50 wt% of the core, and 50 wt% to 70 wt% of the shell. If the core and the shell are present in an amount out of the above range, the acrylic laminate film may have difficulty in realizing desired impact properties due to deterioration in impact resistance. In addition, the core of the acrylic rubber copolymer may include 50 wt% to 90 wt% of the methacrylic acid ester monomer, and 10 wt% to 50 wt% of the aromatic vinyl monomer based on the total weight of the monomers.

In addition, the shell of acrylic rubber copolymer may include 10 wt% to 50 wt% of the acrylic acid ester monomer, and 50 wt% to 90 wt% of the methacrylic acid ester monomer based on the total weight of the monomers. Here, if the acrylic acid ester monomer is present in an amount of less than 10 wt%, the acrylic laminate film can be deteriorated in transparency and physical properties due to compatibility with a thermoplastic resin. Conversely, if the acrylic acid ester monomer is present in an amount of greater than 50 wt%, there can be a problem of deterioration in polymerization conversion ratio.

Here, the acrylic rubber copolymer may have an average diameter from 50 nm to 150 nm. If the acrylic rubber copolymer has an average diameter of less than 50 nm, there is a problem of significant deterioration in impact resistance of the acrylic laminate film. Conversely, if the acrylic rubber copolymer has an average diameter of greater than 150 nm, the acrylic laminate film may have difficulty in realizing whitening resistance due to generation of haze on a surface thereof.

During formation of the core of the acrylic rubber copolymer, when the deionized water has a temperature from 50°C to 70°C in a nitrogen atmosphere, emulsion polymerization is performed by introducing an emulsifier into the reactor and then sufficient stirring, followed by introducing a solution, in which the methacrylic acid ester monomer, the aromatic vinyl monomer, at least one comonomer selected from among methacrylic acid and acrylic acid, the cross-linking agent and the initiator are mixed, into the reactor. Here, to allow the acrylic laminate film to exhibit impact resistance, the acrylic monomer may be present in an amount of 30 wt% to 50 wt% based on the total weight of the monomers. If the amount of the acrylic monomer is not within this range, it is difficult for the acrylic laminate film to exhibit impact resistance.

The emulsifier may be an anionic emulsifier such as $C_4$ to $C_{30}$ alkaline alkyl phosphate, sodium dodecyl sulfate, sodium dodecylbenzene sulfate and alkyl sulfate. Here, the emulsifier may be present in an amount of 0.1 parts by weight to 5 parts by weight based on 100 parts by weight of the total monomers.

In addition, during formation of the shell of the acrylic rubber copolymer, the shell covering the core is formed by introducing the methacrylic ester monomer, the acrylic ester monomer, the chain transfer agent, the initiator and the cross-linking agent into the reactor, followed by emulsion polymerization, such that the acrylic laminate film exhibits stress-whitening resistance.

Here, when the methacrylic ester monomer and the acrylic ester monomer are introduced into the reactor, the acrylic ester monomer may be introduced while the amount thereof is gradationally reduced. That is, when 50 wt% to 90 wt% of the methacrylic ester monomer and 10 wt% to 50 wt% of the acrylic ester monomer are introduced, the monomers may be introduced into the reactor in at least two stages. Preferably, the monomers are introduced into the reactor through two stages in consideration of process simplification.

Here, the amount of the acrylic ester monomer may be reduced after each stage. The reason is that, if the amount of the acrylic ester monomer is not reduced from outside, it is difficult for the acrylic laminate film to exhibit stress-whitening resistance when the film is prepared by mixing the acrylic rubber copolymer with the acrylic thermoplastic resin. The acrylic ester monomer may include at least one monomer selected from among $C_1$ to $C_{15}$ ethyl acrylate, n-butyl acrylate, t-butyl acrylate and 2-ethylhexyl acrylate.

The methacrylic ester monomer may include a $C_1$ to $C_{15}$ methacrylic ester monomer, specifically, at least one monomer selected from among methyl methacrylate, ethyl methacrylate, n-butyl methacrylate, isobutyl methacrylate, t-butyl methacrylate, lauryl methacrylate and 2-ethylhexyl methacrylate.

The aromatic vinyl monomer may include at least one selected from the group consisting of styrene, a-methylstyrene, o-ethylstyrene, p-ethylstyrene, vinyl toluene, and derivatives thereof.

The cross-linking agent may include at least one selected from among 1,2-ethanediol di(meth)acrylate, 1,3-propanediol di(meth)acrylate, 1,4-butanediol di(meth)acrylate, 1,5-pentanediol di(meth)acrylate, 1,6-hexanediol di(meth)acrylate, divinylbenzene, ethylene glycol di(meth)acrylate, propylene glycol di(meth)acrylate, butylene glycol di(meth)acrylate, triethylene glycol di(meth)acrylate, polyethylene glycol di(meth)acrylate, polypropylene glycol di(meth)acrylate, polybutylene glycol di(meth)acrylate and allyl(meth)acrylate.

Here, the cross-linking agent may be present in an amount of 0.1 parts by weight to 10 parts by weight based on 100 parts by weight of the total monomers. If the cross-linking agent is present in an amount of less than 0.1 parts by weight, sufficient effects of cross-linking are not provided. Conversely, if the cross-linking agent is present in an amount of greater than 10 parts by weight, there is a problem of increase in manufacturing costs without further effects.

The core of the acrylic rubber copolymer may further include 0.1 parts by weight to 10 parts by weight of the grafting agent based on 100 parts by weight of the total monomers. Here, the grafting agent may include at least one monomer selected from among allyl (meth)acrylate and diallyl malate. If the grafting agent is present in an amount of less than 0.1 parts by weight based on 100 parts by weight of the total monomers of the core, there is a problem of deterioration in polymerization stability due to increase in viscosity of the acrylic rubber copolymer. Conversely, if the grafting agent is present in an amount of greater than 10 parts by weight based on 100 parts by weight of the total monomers of the core, there is a problem of deterioration in tensile strength of the acrylic laminate film.

The initiator may include at least one selected from among ferrous sulfate, sodium ethylenediaminetetraacetate, cumene hydroperoxide, diisopropylbenzene hydroperoxide, azobisisobutyronitrile, tert-butyl hydroperoxide, p-methane hydroperoxide and benzoyl peroxide. Here, the initiator may be present in an amount of 10 parts by weight or less based on 100 parts by weight of the total monomers. If the initiator is present in an amount of greater than 10 parts by weight based on 100 parts by weight of the total monomers, there is a problem in an economic aspect.

In addition, the chain transfer agent is added in order to adjust a weight average molecular weight of the acrylic rubber copolymer. Here, the chain transfer agent may be selected from among $C_2$ to $C_{18}$ alkyl mercaptan, benzyl mercaptan and mercapto acid. The deionized water may be present in an amount of 100 parts by weight to 500 parts by weight based on 100 parts by weight of the total monomers.

During the preparation of the acrylic rubber copolymer, after completion of polymerization, the resin composition and water are separately recovered through coagulation using a coagulant, washing and drying. Here, the coagulant may be an aqueous solution of an organic acid salt, for example, sodium acetate, calcium acetate, sodium formate and calcium formate. The organic acid salt may be present in an amount of 0.01 parts by weight to 5 parts by weight based on a total weight of the suspension polymerization solution.

## Preparation of acrylic thermoplastic resin

In operation S120 of preparing an acrylic thermoplastic resin, a bead-shaped acrylic thermoplastic resin is formed.

The preparation of the acrylic thermoplastic resin may include: performing suspension polymerization by introducing an acrylic acid ester monomer, a methacrylic acid ester monomer, a chain transfer agent and an initiator into a solution in which a dispersant and a buffer salt are mixed with deionized water; and preparing a bead-shaped acrylic thermoplastic resin by washing, dehydrating and drying the resultant obtained by suspension polymerization.

Here, the bead-shaped acrylic thermoplastic resin may have the same monomer composition as that of the shell of the particulate acrylic rubber copolymer, and a repeated description thereof will be omitted.

The reason for using the bead-shaped acrylic thermoplastic resin having the same monomer composition as that of the shell of the particulate acrylic rubber copolymer is that, if there is discordance in monomer composition between the acrylic thermoplastic resin and the shell of the acrylic rubber copolymer, the acrylic laminate film can be deteriorated in optical properties and transparency due to low compatibility between the acrylic rubber copolymer and the acrylic thermoplastic resin upon mixing thereof, which will be described below, and it is difficult to mix 30 wt% or more of the acrylic rubber copolymer with the acrylic thermoplastic resin.

The dispersant may include acrylic acid, copolymers of methacrylic acid ester and salts thereof and polyvinyl alcohol. The dispersant may be present in an amount of 0.1 wt% to 2 wt% in an aqueous solution based on the total monomer, and a small amount of an inorganic salt may be used as a dispersion aid.

Here, suspension polymerization is performed at a stirring speed of 500 rpm to 700 rpm at a temperature of 60°C to 110°C in a nitrogen atmosphere for a sufficient period of time. After completion of suspension polymerization, the resultant is subjected to washing and drying, thereby obtaining the bead-shaped acrylic thermoplastic resin exhibiting impact resistance.

## Mixing

In operation S130 of mixing, the particulate acrylic rubber copolymer and the bead-shaped acrylic thermoplastic resin are mixed in a weight ratio of 30 to 60:70 to 40, thereby preparing a resin mixture.

Here, amounts of the acrylic rubber copolymer and the acrylic thermoplastic resin are an important factor in terms of stress-whitening resistance and impact resistance. The acrylic rubber copolymer may be present in an amount of 30 wt% to 60 wt%, and the acrylic thermoplastic resin may be present in an amount of 70 wt% to 40 wt%.

Here, if the acrylic rubber copolymer is present in an amount of less than 30 wt%, the acrylic laminate film may easily break during processing due to deterioration in impact resistance, and have difficulty in realizing stress-whitening resistance. Conversely, if the acrylic rubber copolymer is present in an amount of greater than 60 wt%, there can be insignificantly improvement in transparency and optical properties despite improved impact resistance of the acrylic laminate film.

In operation S130 of mixing, the resin mixture may further include at least one selected from fillers, reinforcing agents, colorants, lubricants, stabilizers, antioxidants, heat resistant agents and UV stabilizers. In particular, a UV absorbent may be added to impart weather resistance. The UV absorbent has a molecular weight of 300 or more, preferably 400 or more. If the UV absorbent has a molecular weight of 300 or more, contamination of an injection mold due to volatilization of the UV absorbent can be prevented upon vacuum molding in the injection mold. The UV absorbent may include benzotriazole and triazine UV absorbents, without being limited thereto.

**Molding**

In operation S140 of molding, the resin mixture is molded by melting and kneading the resin mixture, followed by drying, thereby forming the acrylic laminate film.

Here, the resin mixture may be molded by a process such as melt-softening, a T-die process and calendering. Preferably, the resin mixture is molded using the T-die process.

The acrylic laminate film has a thickness of 300 μm or less, preferably from 50 μm to 300 μm, without being limited thereto. In the case that the acrylic laminate film is formed by the T-die process, if the film coming from a T-die is processed using a metal type mirror surface touch roll generally used for films having a thickness of 100 μm or more, the film can exhibit reduced surface roughness and low haze.

However, it is difficult to use a mirror surface touch roll for films having a thickness of 100 μm or less, and when the thickness is adjusted by stretching the film, the film may exhibit high haze due to surface roughness. Such a problem can be solved through use of a carrier type mirror surface roll, and the film exhibiting minimized haze can also be prepared using a press roll or a steel belt type roll.

The resin mixture in which the acrylic rubber copolymer and the acrylic thermoplastic resin are mixed may be formed into a molded article, specifically, the acrylic laminate film which exhibits stress-whitening resistance and impact resistance and does not suffer from deterioration in transparency, by a process, such as injection and extrusion.

Fig. 2 is a diagram of a twin roll type continuous casting apparatus. The T-die process will be briefly described with reference to Fig. 2.

Referring to Fig. 2, in a twin roll type continuous casting apparatus 1, one of two rolls is a stationary roll 10 and is secured at a constant position. The other roll is a moving roll 20, and since the moving roll 20 is moved in a direction of the stationary roll 10 by a moving roll driving unit 30, the moving roll 20 travels close to or far from the stationary roll 10.

The stationary roll 10 and the moving roll 20 rotate in opposite directions while compressing the film such that a molded film (F) is discharged in a downward direction. The molded film (F) may also be discharged in a leftward or rightward direction, although not shown in Fig. 2.

Wedge-shaped support blocks 40 compressing the molded film (F) may be mounted between the stationary roll 10 and the moving roll 20 at a downward position from the stationary roll 10 and the moving roll 20. Here, a support block driving unit 45 may be mounted on the support block 40 placed at a moving roll side in order to adjust thickness of the molded film (F). Operation of the moving roll driving unit 30 and the support block driving unit 45 may be controlled by a control unit 50 mounted at one side of the stationary roll 10 and the moving roll 20.

The support block driving unit 45 may be driven by a hydraulic cylinder or a motor. In addition, the molded film (F) passes between the support blocks on both sides thereof, and then is supported by a plurality of support rolls 60.

Here, when the support blocks 40 compress the molded film (F) by the support block driving unit 45, pressure applied to the film may be preset in the case of using the hydraulic cylinder, current may be preset in the case of using the motor, or pressure may be measured and feedback-controlled by a road cell. thereby controlling a position of the support block 40.

When the acrylic laminate film is formed using the aforementioned twin roll type continuous casting apparatus which employs the T-die process, a film exhibiting reduced surface roughness and low haze can be realized.

**EXAMPLES**

Hereinafter, the present invention will be described in more detail with reference to some examples. It should be understood that these examples are provided for illustration only and are not to be in any way construed as limiting the present invention.

Descriptions of details apparent to those skilled in the art will be omitted for clarity.

**1. Preparation of specimen**

**Example 1**

First, to prepare an acrylic rubber copolymer, 250 parts by weight of deionized water, 0.002 parts by weight of ferrous sulfate, 0.008 parts by weight of an EDTA·2Na salt, 0.2 parts by weight of sodium formaldehyde sulfoxylate, and 2 parts by weight of sodium dodecyl sulfate were injected into a reactor provided with a stirrer, followed by nitrogen substitution, and then heated to 65°C. After heating, 1/10 of a mixed solution including 33 parts by weight of butyl methacrylate, 7 parts by weight of styrene, 1 part by weight of allyl methacrylate and 0.05 parts by weight of cumene hydroperoxide was added dropwise over 30 minutes, followed by dropwise addition of the remaining 9/10 of the mixed solution, and then, emulsion polymerization was performed for 1 hour while stirring the mixture. Here, the obtained glass-state polymer had an average diameter of 40 nm.

Next, a mixed solution including 0.5 parts by weight of sodium dodecyl sulfate, 6 parts by weight of butyl acrylate, 24 parts by weight of methyl methacrylate, 0.3 parts by weight of allyl methacrylate, 0.04 parts by weight of dodecyl mercaptan and 0.05 parts by weight of cumene hydroperoxide was added dropwise over 1 hour, followed by dropwise addition of a mixed solution including 3 parts by weight of butyl acrylate, 27 parts by weight of methyl methacrylate, 0.09 parts by weight of dodecyl mercaptan and 0.05 parts by weight of cumene hydroperoxide over 1 hour, and then, polymerization was performed for 1 hour. The final polymer had an average diameter of 60 nm. To coagulate an acrylic rubber copolymer which was the final rubber copolymer, coagulation was performed at 70°C by introducing 0.02 parts by weight of calcium acetate in terms of solid content thereto, followed by dehydration of the obtained powder in distilled water and drying at 80°C.

Next, to prepare an acrylic thermoplastic resin, 0.3 parts by weight of dodecyl mercaptan and 0.15 parts by weight of azobisisobutyronitrile were added to a monomer including 85 wt% of methyl methacrylate and 15 wt% of butyl acrylate based on 100 parts by weight of the monomer, and then stirred, followed by mixing the components with a solution in which 0.12 g of a copolymer of sodium-substituted 70% methacrylic acid and 30% methyl methacrylate as a dispersant, and 1.2 g of $NaH_2PO_4·2H_2O$ and 1.8 g of $NaH_2PO_4·12H_2O$ as a buffer salt were dissolved in 250 parts by weight of deionized water. Next, the mixture was subjected to primary polymerization at 80°C for 90 minutes while stirred at 600 rpm, and then secondary polymerization for 30 minutes by heating the mixture to 110°C simultaneously with occurrence of a polymerization peak, followed by cooling to 30°C. The obtained bead-shaped polymer was repeatedly subjected to washing with distilled water and dehydration three times, and the bead-shaped acrylic thermoplastic resin was dried in an oven.

Next, 40 wt% of the acrylic rubber copolymer powder and 60 wt% of the bead-shaped acrylic thermoplastic resin were mixed, and then, 1.5 parts by weight of Tinuvin 234 as a UV absorbent was mixed with the mixture based on 100 parts by weight of the mixture, followed by extrusion molding at 260°C using a T-die extruder, thereby preparing a 75 $\mu$m thick acrylic laminate film.

**Example 2**

An 80 $\mu$m thick acrylic laminate film was prepared in the same manner as in Example 1 except that the core of the acrylic rubber copolymer was present in an amount of 50 wt%.

**Example 3**

A 77 $\mu$m thick acrylic laminate film was prepared in the same manner as in Example 1 except that the shell of the acrylic rubber copolymer prepared by polymerization using 4.5 parts by weight of the butyl acrylate and 25.5 parts by weight of the methyl methacrylate, and the acrylic thermoplastic resin prepared by polymerization using 87.5 parts by weight of the methyl methacrylate and 12.5 parts by weight of the butyl acrylate were mixed.

**Example 4**

A 76 $\mu$m thick acrylic laminate film was prepared in the same manner as in Example 1 except that the acrylic rubber copolymer having an average diameter of 100 nm was used.

**Example 5**

An 85 µm thick acrylic laminate film was prepared in the same manner as in Example 1 except that an acrylic rubber copolymer having an average diameter of 150 nm was used, and azobisisobutyronitrile was used as an initiator.

**Example 6**

A 79 µm thick acrylic laminate film was prepared in the same manner as in Example 1 except that 60 wt% of the acrylic rubber copolymer and 40 wt% of the acrylic thermoplastic resin were mixed.

**Example 7**

A 150 µm thick acrylic laminate film was prepared in the same manner as in Example 1 except that although T-die extrusion was performed, the film was molded through a mirror surface touch roll.

**Example 8**

A 55 µm thick acrylic laminate film was prepared in the same manner as in Example 1 except that although T-die extrusion was performed, the film was molded through a carrier type roll.

**Comparative Example 1**

An 80 µm thick acrylic laminate film was prepared in the same manner as in Example 1 except that polymerization of the acrylic thermoplastic resin was performed using 95 wt% of the methyl methacrylate and 5 wt% of the butyl acrylate.

**Comparative Example 2**

A 70 µm thick acrylic laminate film was prepared in the same manner as in Example 1 except that polymerization of the acrylic thermoplastic resin was performed using 85 wt% of the methyl methacrylate and 15 wt% of the methyl acrylate.

**Comparative Example 3**

A 73 µm thick acrylic laminate film was prepared in the same manner as in Example 1 except that the shell of the acrylic rubber copolymer was prepared by polymerization using 6 wt% of the butyl acrylate and 54 wt% of the methyl methacrylate instead of separate two-stage polymerization.

**Comparative Example 4**

A 75 µm thick acrylic laminate film was prepared in the same manner as in Example 1 except that 20 wt% of the acrylic rubber copolymer and 80 wt% of the acrylic thermoplastic resin were mixed.

**Comparative Example 5**

A 73 µm thick acrylic laminate film was prepared in the same manner as in Example 1 except that the acrylic rubber copolymer having an average diameter of 250 nm was used.

**Comparative Example 6**

A 60 µm thick acrylic laminate film was prepared in the same manner as in Example 1 except that although T-die extrusion was performed, the film was molded by stretching without use of a mirror surface touch roll.

**Comparative Example 7**

A 100 µm thick acrylic laminate film was prepared in the same manner as in Example 1 except that although T-die extrusion was performed, the film was molded by compressing an only one side mirror surface using a mirror surface touch roll.

**2. Property Evaluation**

Table 1 shows evaluation results of properties of specimens according to Examples 1 to 6, and Table 2 shows evaluation results of properties of specimens according to Comparative Examples 1 to 5. In addition, Table 3 shows evaluation results of properties of specimens according to Examples 7 to 8 and Comparative Examples 6 to 7.

1) Grafting rate (G): The prepared powder in the preparation of the acrylic rubber copolymer was dissolved in acetone, followed by separation of the powder into solubles and insolubles, thereby calculating grafting rate by considering the insolubles as graft materials.

$$G=(\text{Weight of insolubles}-\text{Weight of rubbery polymer})/\text{Weight of rubbery polymer}\times100$$

2) Transparency (%) and Haze: Transparency and haze were measured using a hazemeter in accordance with ASTM D1003.
3) Yellow index (YI): Yellow index was measured in accordance with ASTM D1925.
4) Elongation (%): Elongation was measured at room temperature using a Z010 (Zwick/Roell Co., Ltd.) which is a universal testing machine (UTM). A specimen of a width of 10 mm was prepared, thereby measuring elongation of the specimen at a tensile speed of 50 mm/min.
5) Average diameter (nm): Average diameter was measured by a light scattering method in accordance with ASTM D1705 and ASTM D2921.
6) Pencil hardness: Pencil hardness was measured under a load of 1 kg in accordance with D3363.
7) Stress-whitening: The film was bent and folded at an angle of 180°, thereby observing whitening of the film.

O: No whitening
A: Slight whitening
X: Severe whitening

8) Thickness smoothness: Thickness of the film was measured throughout overall width using a thickness measuring instrument.

O: Thickness deviation of average±1% throughout overall width
Δ: Thickness deviation of average±3% throughout overall width
X: Thickness deviation of greater than average±3% throughout overall width

[Table 1]

| Item | | Example 1 | Example 2 | Example 3 | Example 4 | Example 5 | Example 6 |
|---|---|---|---|---|---|---|---|
| Mixing ratio (%) | (A) | 40 | 40 | 40 | 40 | 40 | 60 |
| | (B) | 60 | 60 | 60 | 60 | 60 | 40 |
| Amount of rubber | | 16 | 20 | 16 | 16 | 20 | 18 |
| Grafting rate (G) | | 110 | 80 | 115 | 110 | 115 | 110 |
| Stress-whitening | | ○ | ○ | ○ | Δ | ○ | Δ |
| Film thickness (μm) | | 75 | 80 | 115 | 110 | 115 | 110 |
| Transmittance (%) | | 92 | 92 | 90 | 93 | 91 | 90 |
| Haze | | 0.45 | 0.7 | 0.5 | 0.6 | 0.75 | 0.8 |
| Tensile strength (%) | MD | 110 | 120 | 115 | 115 | 110 | 115 |
| | TD | 105 | 125 | 110 | 105 | 105 | 110 |
| Pencil hardness | | H | B | B | H | H | B |

(A): Acrylic rubber copolymer, (B): acrylic thermoplastic resin

[Table 2]

| Item | | Comparative Example 1 | Comparative Example 2 | Comparative Example 3 | Comparative Example 4 | Comparative Example 5 |
|---|---|---|---|---|---|---|
| Mixing ratio (%) | (A) | 40 | 40 | 40 | 20 | 40 |
| | (B) | 60 | 60 | 60 | 80 | 60 |
| Amount of rubber | | 16 | 16 | 16 | 8 | 16 |
| Grafting rate (G) | | 120 | 100 | 105 | 108 | 110 |
| Stress-whitening | | X | Δ | X | X | X |
| Film thickness ($\mu$m) | | 80 | 70 | 73 | 75 | 73 |
| Transmittance (%) | | 92 | 93 | 90 | 93 | 92 |
| Haze | | 5 | 1.8 | 1.5 | 0.8 | 1.3 |
| Tensile strength (%) | MD | 100 | 98 | 80 | 60 | 110 |
| | TD | 90 | 100 | 85 | 77 | 105 |
| Pencil hardness | | H | HB | H | 2H | H |

Referring to Tables 1 and 2, it can be seen that the specimens according to Examples 1 to 6 did not suffer from stress-whitening and deterioration in transparency after processing of the film, and exhibited excellent haze, impact resistance and processability, as compared with the specimens according to Comparative Examples 1 to 5.

[Table 3]

| Item | Film thickness ($\mu$m) | Total transmittance (%) | Haze | Film thickness smoothness |
|---|---|---|---|---|
| Example 7 | 150 | 95 | 0.5 | ○ |
| Example 8 | 55 | 95 | 0.5 | ○ |
| Comparative Example 6 | 60 | 93 | 4.1 | Δ |
| Comparative Example 7 | 100 | 92 | 6.0 | X |

Referring to Table 3, it can be seen that the specimen according to Example 7 had a total transmittance of 95% and a haze of 0.5, and exhibited excellent film thickness smoothness despite a film thickness thereof of 150 $\mu$m.
In addition, it can be seen that the specimen according to Example 8 having a film thickness of 55 $\mu$m also had a total transmittance of 95% and a haze of 0.5, and exhibited excellent film thickness smoothness.
Conversely, it can be seen that the specimen according to Comparative Example 6 having a film thickness of 60 $\mu$m had a total transmittance of 95% and a significantly high haze of 4.1 as compared with the specimens according to Examples 5 to 6, and exhibited inferior film thickness smoothness to the specimens according to Examples 5 to 6.
In addition, it can be seen that the specimen according to Comparative Example 7 having a film thickness of 100 $\mu$m had just a total transmittance of 92% and a poor haze of 6.0, and exhibited poor film thickness smoothness.

Claims

1.  An acrylic laminate film comprising:

    30 wt% to 60 wt% of a particulate acrylic rubber copolymer having a multilayer structure of a core and a shell; and 70 wt% to 40 wt% of a bead-shaped acrylic thermoplastic resin,

    wherein the core of the acrylic rubber copolymer comprises at least one selected from among a methacrylic acid ester monomer, an aromatic vinyl monomer, a cross-linking agent and an initiator, and the shell of the acrylic rubber copolymer comprises at least one selected from among an acrylic acid ester monomer, a methacrylic acid ester monomer, a chain transfer agent, an initiator and a cross-linking agent,

wherein the core of the acrylic rubber copolymer comprises 50 wt% to 90 wt% of the methacrylic acid ester monomer and 10 wt% to 50 wt% of the aromatic vinyl monomer such as styrene, a-methylstyrene, o-ethylstyrene, p-ethylstyrene, vinyl toluene, or derivatives thereof, based on a total weight of the monomers, wherein the shell of the acrylic rubber copolymer comprises 10 wt% to 50 wt% of the acrylic acid ester monomer and 50 wt% to 90 wt% of the methacrylic acid ester monomer, based on a total weight of the monomers.

wherein the bead-shaped acrylic thermoplastic resin comprises at least one selected from among an acrylic acid ester monomer, a methacrylic acid ester monomer, a chain transfer agent, and an initiator,

wherein the acrylic thermoplastic resin comprises 10 wt% to 50 wt% of the acrylic acid ester monomer and 50 wt% to 90 wt% of the methacrylic acid ester monomer, based on the total weight of the monomers,

wherein the bead-shaped acrylic thermoplastic resin has the same monomer composition as that of the shell.

2. The acrylic laminate film according to claim 1, wherein the acrylic rubber copolymer comprises 30 wt% to 50 wt% of the core, and 50 wt% to 70 wt% of the shell.

3. The acrylic laminate film according to claim 1, wherein the cross-linking agent comprises at least one selected from among 1,2-ethanediol di(meth)acrylate, 1,3-propanediol di(meth)acrylate, 1,4-butanediol di(meth)acrylate, 1,5-pentanediol di(meth)acrylate, 1,6-hexanediol di(meth)acrylate, divinylbenzene, ethylene glycol di(meth)acrylate, propylene glycol di(meth)acrylate, butylene glycol di(meth)acrylate, triethylene glycol di(meth)acrylate, polyethylene glycol di(meth)acrylate, polypropylene glycol di(meth)acrylate, polybutylene glycol di(meth)acrylate, and allyl (meth)acrylate.

4. The acrylic laminate film according to claim 1, wherein the core of the acrylic rubber copolymer further comprises 0.1 parts by weight to 10 parts by weight of a grafting agent based on 100 parts by weight of the total monomers, wherein the grafting agent comprises at least one selected from among allyl (meth)acrylate and diallyl malate.

5. The acrylic laminate film according to claim 1, wherein the acrylic rubber copolymer has an average diameter from 50 nm to 150 nm.

6. The acrylic laminate film according to claim 1, wherein the initiator comprises at least one selected from among cumene hydroperoxide, diisopropylbenzene hydroperoxide, azobisisobutyronitrile, tert-butyl hydroperoxide, p-methane hydroperoxide, and benzoyl peroxide.

7. A method for manufacturing an acrylic laminate film comprising:

   (a) preparing a particulate acrylic rubber copolymer having a structure of a core and a shell;
   (b) preparing a bead-shaped acrylic thermoplastic resin;
   (c) preparing a resin mixture by mixing the particulate acrylic rubber copolymer and the bead-shaped acrylic thermoplastic resin in a weight ratio of 30 to 60:70 to 40; and
   (d) molding the resin mixture by melting and kneading the resin mixture,

   wherein the (a) preparing a particulate acrylic rubber copolymer comprises:

   (a-1) forming the core by mixing a methacrylic acid ester monomer, an aromatic vinyl monomer, a cross-linking agent and an initiator with deionized water in a reactor under a nitrogen atmosphere, followed by emulsion polymerization; and
   (a-2) preparing a particulate acrylic rubber copolymer having a structure of a core and a shell by forming the shell, which covers the core through emulsion polymerization by mixing an acrylic acid ester monomer, a methacrylic acid ester monomer, a chain transfer agent, an initiator and a cross-linking agent in the reactor of a nitrogen atmosphere, followed by coagulation, dehydration and drying,

   wherein the (b) preparing a bead-shaped acrylic thermoplastic resin comprises:

   (b-1) performing suspension polymerization by introducing the acrylic acid ester monomer, the methacrylic acid ester monomer, the chain transfer agent and the initiator into a solution in which a dispersant and a buffer salt are mixed with deionized water; and

(b-2) preparing a bead-shaped acrylic thermoplastic resin by washing, dehydrating and drying the resultant obtained through suspension polymerization,

wherein the core of the acrylic rubber copolymer comprises 50 wt% to 90 wt% of the methacrylic acid ester monomer and 10 wt% to 50 wt% of the aromatic vinyl monomer such as styrene, a-methylstyrene, o-ethylstyrene, p-ethylstyrene, vinyl toluene, or derivatives thereof, based on a total weight of the monomers, wherein the shell of the acrylic rubber copolymer comprises 10 wt% to 50 wt% of the acrylic acid ester monomer and 50 wt% to 90 wt% of the methacrylic acid ester monomer, based on a total weight of the monomers.

wherein the bead-shaped acrylic thermoplastic resin comprises at least one selected from among an acrylic acid ester monomer, a methacrylic acid ester monomer, a chain transfer agent, and an initiator,

wherein the acrylic thermoplastic resin comprises 10 wt% to 50 wt% of the acrylic acid ester monomer and 50 wt% to 90 wt% of the methacrylic acid ester monomer, based on the total weight of the monomers,

wherein the bead-shaped acrylic thermoplastic resin has the same monomer composition as that of the shell.

8. The method according to claim 7, wherein in (a-1) or (a-2), an emulsifier comprising $C_4$ to $C_{30}$ alkaline alkyl phosphate or alkyl sulfate is further added before emulsion polymerization.

9. The method according to claim 7, wherein in (a-2), the acrylic acid ester monomer and the methacrylic acid ester monomer are introduced in at least two stages.

**Patentansprüche**

1. Acryllaminatfolie, Folgendes umfassend:

30 bis 60 Gew.-% eines Partikel-Acrylkautschuk-Copolymers mit einer Mehrschichtstruktur aus einem Kern und einer Hülle; und

70 bis 40 Gew.-% eines in Kügelchen geformten thermoplastischen Acrylharzes, wobei der Kern des Acrylkautschuk-Copolymers wenigstens ein Methacrylsäureester-Monomer, ein aromatisches Vinyl-Monomer, ein Vernetzungsmittel und/oder einen Initiator umfasst und die Hülle des Acrylkautschuk-Copolymers wenigstens ein Acrylsäureester-Monomer, ein Methacrylsäureester-Monomer, ein Kettenübertragungsmittel, einen Initiator und/oder ein Vernetzungsmittel umfasst,

wobei der Kern des Acrylkautschuk-Copolymers Folgendes umfasst: 50 bis 90 Gew.-% des Methacrylsäureester-Monomers und 10 bis 50 Gew.-% des aromatischen Vinyl-Monomers, wie etwa Styrol, $\alpha$-Methylstyrol, o-Ethylstyrol, p-Ethylstyrol, Vinyltoluol oder Derivate davon, bezogen auf das Gesamtgewicht der Monomere, wobei die Hülle des Acrylkautschuk-Copolymers Folgendes umfasst: 10 bis 50 Gew.-% des Acrylsäureester-Monomers und 50 bis 90 Gew.-% des Methacrylsäureester-Monomers, bezogen auf das Gesamtgewicht der Monomere.

wobei das in Kügelchen geformte thermoplastische Acrylharz wenigstens ein Acrylsäureester-Monomer, ein Methacrylsäureester-Monomer, ein Kettenübertragungsmittel und/oder einen Initiator umfasst,

wobei das thermoplastische Acrylharz 10 bis 50 Gew.-% des Acrylsäureester-Monomers und 50 bis 90 Gew.-% des Methacrylsäureester-Monomers, bezogen auf das Gesamtgewicht der Monomere, umfasst,

wobei das in Kügelchen geformte thermoplastische Acrylharz dieselbe Monomerzusammensetzung aufweist wie das der Hülle.

2. Acryllaminatfolie nach Anspruch 1, wobei das Acrylkautschuk-Copolymer 30 bis 50 Gew.-% des Kerns und 50 bis 70 Gew.-% der Hülle umfasst.

3. Acryllaminatfolie nach Anspruch 1, wobei das Vernetzungsmittel wenigstens eines aus 1,2-Ethandiol-di(meth)acrylat, 1,3-Propandiol-di(meth)acrylat, 1,4-Butandiol-di(meth)acrylat, 1,5-Pentandiol-di(meth)acrylat, 1,6-Hexandiol-di(meth)acrylat, Divinylbenzol, Ethylenglycol-di(meth)acrylat, Propylenglycol-di(meth)acrylat, Butylenglycol-di(meth)acrylat, Triethylenglycol-di(meth)acrylat, Polyethylenglycol-di(meth)acrylat, Polypropylenglycol-di(meth)acrylat, Polybutylenglycol-di(meth)acrylat und/oder Allyl(meth)acrylat umfasst.

4. Acryllaminatfolie nach Anspruch 1, wobei der Kern des Acrylkautschuk-Copolymers ferner 0,1 bis 10 Gewichtsanteile eines Pfropfmittels umfasst, bezogen auf 100 Gewichtsanteile der Monomere insgesamt, wobei das Pfropfmittel wenigstens Allyl(meth)acrylat und/oder Diallylmalat umfasst.

**5.** Acryllaminatfolie nach Anspruch 1, wobei das Acrylkautschuk-Copolymer einen durchschnittlichen Durchmesser von 50 nm bis 150 nm aufweist.

**6.** Acryllaminatfolie nach Anspruch 1, wobei der Initiator wenigstens Cumolhydroperoxid, Diisopropylbenzolhydroperoxid, Azobisisobutyronitril, Tertbutylhydroperoxid, p-Methanhydroperoxid und/oder Benzoylperoxid umfasst.

**7.** Verfahren zum Erzeugen einer Acryllaminatfolie, Folgendes umfassend:

(a) Herstellen eines Partikel-Acrylkautschuk-Copolymers mit einer Mehrschichtstruktur aus einem Kern und einer Hülle;
(b) Herstellen eines in Kügelchen geformten thermoplastischen Acrylharzes;
(c) Herstellen einer Harzmischung durch Mischen des Partikel-Acrylkautschuk-Copolymers und des in Kügelchen geformten thermoplastischen Acrylharzes in einem Gewichtsverhältnis von 30 bis 60 zu 70 bis 40; und
(d) Formen der Harzmischung durch Schmelzen und Kneten der Harzmischung,

wobei das (a) Herstellen eines Partikel-Acrylkautschuk-Copolymers Folgendes umfasst:

(a-1) Ausbilden des Kerns durch Mischen eines Methacrylsäureester-Monomers, eines aromatischen Vinyl-Monomers, eines Vernetzungsmittels und eines Initiators mit entionisiertem Wasser in einem Reaktor in einer Stickstoffatmosphäre, gefolgt von Emulsionspolymerisation; und
(a-2) Herstellen eines Partikel-Acrylkautschuk-Copolymers mit einer Mehrschichtstruktur aus einem Kern und einer Hülle durch Ausbilden der Hülle, die den Kern umgibt, durch Emulsionspolymerisation, indem in dem Reaktor in einer Stickstoffatmosphäre ein Acrylsäureester-Monomer, ein Methacrylsäureester-Monomer, ein Kettenübertragungsmittel, ein Initiator und ein Vernetzungsmittel vermischt werden, gefolgt von Koagulierung, Dehydrierung und Trocknen,

wobei das (b) Herstellen eines in Kügelchen geformten thermoplastischen Acrylharzes Folgendes umfasst:

(b-1) Ausführen von Suspensionspolymerisierung durch Geben des Acrylsäureester-Monomers, des Methacrylsäureester-Monomers, des Kettenübertragungsmittels und des Initiators in eine Lösung, in der ein Dispergiermittel und ein Puffersalz mit entionisiertem Wasser vermischt sind; und
(b-2) Herstellen eines in Kügelchen geformten thermoplastischen Acrylharzes durch Waschen, Dehydrieren und Trocknen des aus der Suspensionspolymerisierung erhaltenen Ergebnisses,

wobei der Kern des Acrylkautschuk-Copolymers Folgendes umfasst: 50 bis 90 Gew.-% des Methacrylsäureester-Monomers und 10 bis 50 Gew.-% des aromatischen Vinyl-Monomers, wie etwa Styrol, $\alpha$-Methylstyrol, o-Ethylstyrol, p-Ethylstyrol, Vinyltoluol oder Derivate davon, bezogen auf das Gesamtgewicht der Monomere, wobei die Hülle des Acrylkautschuk-Copolymers Folgendes umfasst: 10 bis 50 Gew.-% des Acrylsäureester-Monomers und 50 bis 90 Gew.-% des Methacrylsäureester-Monomers, bezogen auf das Gesamtgewicht der Monomere.
wobei das in Kügelchen geformte thermoplastische Acrylharz wenigstens ein Acrylsäureester-Monomer, ein Methacrylsäureester-Monomer, ein Kettenübertragungsmittel und/oder einen Initiator umfasst,
wobei das thermoplastische Acrylharz 10 bis 50 Gew.-% des Acrylsäureester-Monomers und 50 bis 90 Gew.-% des Methacrylsäureester-Monomers, bezogen auf das Gesamtgewicht der Monomere, umfasst,
wobei das in Kügelchen geformte thermoplastische Acrylharz dieselbe Monomerzusammensetzung aufweist wie das der Hülle.

**8.** Verfahren nach Anspruch 7, wobei in (a-1) oder (a-2) vor der Emulsionspolymerisation ferner ein alkalisches $C_4$- bis $C_{30}$-Alkylphosphat oder -Alkylsulfat enthaltender Emulgator hinzugefügt wird.

**9.** Verfahren nach Anspruch 7, wobei in (a-2) das Acrylsäureester-Monomer und das Methacrylsäureester-Monomer in wenigstens zwei Schritten hinzugefügt werden.

**Revendications**

**1.** Film acrylique stratifié comprenant :

entre 30 % en poids et 60 % en poids d'un copolymère de caoutchouc acrylique particulaire ayant une structure multicouche d'un noyau et d'une enveloppe ; et

entre 70 % en poids et 40 % en poids d'une résine thermoplastique acrylique sous forme de billes,

dans lequel le noyau du copolymère de caoutchouc acrylique comprend au moins un choisi parmi un monomère d'ester d'acide méthacrylique, un monomère vinylique aromatique, un agent de réticulation et un initiateur, et l'enveloppe du copolymère de caoutchouc acrylique comprend au moins un choisi parmi un monomère d'ester d'acide acrylique, un monomère d'ester d'acide méthacrylique, un agent de transfert de chaîne, un initiateur et un agent de réticulation,

dans lequel le noyau du copolymère de caoutchouc acrylique comprend entre 50 % en poids et 90 % en poids du monomère d'ester d'acide méthacrylique et entre 10 % en poids et 50 % en poids du monomère vinylique aromatique tel que le styrène, l'a-méthylstyrène, l'o-éthylstyrène, le p-éthylstyrène, le vinyltoluène, ou des dérivés de ceux-ci, sur la base d'un poids total des monomères, dans lequel l'enveloppe du copolymère de caoutchouc acrylique comprend entre 10 % en poids et 50 % en poids du monomère d'ester d'acide acrylique et entre 50 % en poids et 90 % en poids du monomère d'ester d'acide méthacrylique, sur la base d'un poids total des monomères,

dans lequel la résine thermoplastique acrylique sous forme de billes comprend au moins une choisie parmi un monomère d'ester d'acide acrylique, un monomère d'ester d'acide méthacrylique, un agent de transfert de chaîne et un initiateur,

dans lequel la résine thermoplastique acrylique comprend entre 10 % en poids et 50 % en poids du monomère d'ester d'acide acrylique et entre 50 % en poids et 90 % en poids du monomère d'ester d'acide méthacrylique, sur la base d'un poids total des monomères.

dans lequel la résine thermoplastique acrylique sous forme de billes a la même composition monomérique que celle de l'enveloppe.

2. Film acrylique stratifié selon la revendication 1, dans lequel le copolymère de caoutchouc acrylique comprend entre 30 % en poids et 50 % en poids du noyau, et entre 50 % en poids et 70 % en poids de l'enveloppe.

3. Film acrylique stratifié selon la revendication 1, dans lequel l'agent de réticulation comprend au moins un choisi parmi le diméthacrylate de 1,2-éthanediol, le diméthacrylate de 1,3-propanediol, le diméthacrylate de 1,4-butanediol, le diméthacrylate de 1,5-pentanediol, le diméthacrylate de 1,6-hexanediol, le divinylbenzène, le diméthacrylate d'éthylène glycol, le diméthacrylate de propylène glycol, le diméthacrylate de butylène glycol, le diméthacrylate de triéthylène glycol, le diméthacrylate de polyéthylène glycol, le diméthacrylate de polypropylène glycol, le diméthacrylate de polybutylène glycol et le méthacrylate d'allyle.

4. Film acrylique stratifié selon la revendication 1, dans lequel le noyau du copolymère de caoutchouc acrylique comprend en outre entre 0,1 partie en poids et 10 parties en poids d'un agent de réticulation, sur la base de 100 parties en poids des monomères totaux, dans lequel l'agent de réticulation comprend au moins un choisi parmi le méthacrylate d'allyle et le malate de diallyle.

5. Film acrylique stratifié selon la revendication 1, dans lequel le copolymère de caoutchouc acrylique a un diamètre moyen compris entre 50 nm et 150 nm.

6. Film acrylique stratifié selon la revendication 1, dans lequel l'initiateur comprend au moins un choisi parmi l'hydroperoxyde de cumène, l'hydroperoxyde de diisopropylbenzène, l'azobisisobutyronitrile, l'hydroperoxyde de tert-butyle, l'hydroperoxyde de p-méthane et le peroxyde de benzoyle.

7. Procédé de fabrication d'un film acrylique stratifié comprenant :

(a) la préparation d'un copolymère de caoutchouc acrylique particulaire ayant une structure multicouche d'un noyau et d'une enveloppe ;
(b) la préparation d'une résine thermoplastique acrylique sous forme de billes ;
(c) la préparation d'un mélange résineux par mélange du copolymère de caoutchouc acrylique particulaire et de la résine thermoplastique acrylique sous forme de billes dans un rapport en poids de 30 à 60:70 à 40 ; et
(d) le moulage du mélange résineux par fusion et malaxage du mélange résineux,

dans lequel la (a) préparation d'un copolymère de caoutchouc acrylique particulaire comprend :

(a-1) la formation du noyau par mélange d'un monomère d'ester d'acide méthacrylique, d'un monomère vinylique aromatique, d'un agent de réticulation et d'un initiateur avec de l'eau déminéralisée dans un réacteur sous une atmosphère d'azote, puis la polymérisation en émulsion ; et

(a-2) la préparation d'un copolymère de caoutchouc acrylique particulaire ayant une structure multicouche d'un noyau et d'une enveloppe par formation de l'enveloppe, qui recouvre le noyau, par polymérisation en émulsion par mélange d'un monomère d'ester d'acide acrylique, d'un monomère d'ester d'acide méthacrylique, d'un agent de transfert de chaîne, d'un initiateur et d'un agent de réticulation dans le réacteur sous une atmosphère d'azote, puis la coagulation, la déshydratation et le séchage,

dans lequel la (b) préparation d'une résine thermoplastique acrylique sous forme de billes comprend :

(b-1) la réalisation d'une polymérisation en suspension par introduction du monomère d'ester d'acide acrylique, du monomère d'ester d'acide méthacrylique, de l'agent de transfert de chaîne et de l'initiateur dans une solution dans laquelle un dispersant et un sel tampon sont mélangés avec de l'eau déminéralisée ; et

(b-2) la préparation d'une résine thermoplastique acrylique sous forme de billes par lavage, déshydratation et séchage du produit obtenu par polymérisation en suspension,

dans lequel le noyau du copolymère de caoutchouc acrylique comprend entre 50 % en poids et 90 % en poids du monomère d'ester d'acide méthacrylique et entre 10 % en poids et 50 % en poids du monomère vinylique aromatique tel que le styrène, l'$\alpha$-méthylstyrène, l'o-éthylstyrène, le p-éthylstyrène, le vinyltoluène, ou des dérivés de ceux-ci, sur la base d'un poids total des monomères, dans lequel l'enveloppe du copolymère de caoutchouc acrylique comprend entre 10 % en poids et 50 % en poids du monomère d'ester d'acide acrylique et entre 50 % en poids et 90 % en poids du monomère d'ester d'acide méthacrylique, sur la base d'un poids total des monomères,

dans lequel la résine thermoplastique acrylique sous forme de billes comprend au moins une choisie parmi un monomère d'ester d'acide acrylique, un monomère d'ester d'acide méthacrylique, un agent de transfert de chaîne et un initiateur,

dans lequel la résine thermoplastique acrylique comprend entre 10 % en poids et 50 % en poids du monomère d'ester d'acide acrylique et entre 50 % en poids et 90 % en poids du monomère d'ester d'acide méthacrylique, sur la base d'un poids total des monomères,

dans lequel la résine thermoplastique acrylique sous forme de billes a la même composition monomérique que celle de l'enveloppe.

**8.** Procédé selon la revendication 7, dans lequel dans (a-1) ou (a-2), un émulsifiant comprenant du sulfate d'alkyle ou du phosphate d'alkyle alcalin en $C_4$ à $C_{30}$ est en outre ajouté avant la polymérisation en émulsion.

**9.** Procédé selon la revendication 7, dans lequel dans (a-2), le monomère d'ester d'acide acrylique et le monomère d'ester d'acide méthacrylique sont introduits lors d'au moins deux étapes.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1582538 A
- JP H10306192 B